# EUROPEAN PATENT APPLICATION

(11) **EP 2 450 766 A1**
(43) Date of publication of application: **09.05.2012**
(21) Application number: 11075241.7
(22) Date of filing: 28.10.2011
(51) Int. Cl.: G05D 23/13

(54) **An improved thermostatic mixer for sanitary use**

(30) Priority: 08.11.2010 IT TO20100887
(71) Applicant: Suraci, Pietro, 27051 Cava Manara (IT)
(72) Inventor: Suraci, Pietro, 27051 Cava Manara (IT)
(74) Representative: Patrito, Pier Franco

(57) **Abstract**

A thermostatic mixer device for sanitary use, comprising a body (1), a bottom member (5), inlet openings for cold water (2) and for hot water (3), a delivery passageway (6) for mixed water, a movable slider (12) provided in order to control in complementary way the passage sections of the inlet openings for cold and hot water, a thermometric element (7-9) of the type operating by dilation, provided in order to displace the slider (12) according to the temperature of the delivered mixed water, a spring (16) for returning the slider (12), and a control shaft (10) provided for controlling the position of the thermometric element (7-9) in order to control the temperature of the delivered mixed water, characterized in that the thermostatic mixer device includes a member (14) movable along a limited stroke. provided in register with the inlet opening (3) for hot water and cooperating with the slider (12) in order to control the passage section of the inlet opening (3) for hot water, and the needed elastic security element (15) is provided for operating between the bottom member (5) of the device and the movable element (14), and it has the character of an elastic return member which normally keeps the movable element (14) in a pre-established position, but allows its elastic retraction.

## Description

The subject of this invention is a thermostatic mixer device for sanitary use having special features intended to allow its manufacture with a simple and cheap, easily mounted structure, though ensuring a correct operation.

A thermostatic mixer device of the considered kind comprises a body, a bottom member, inlet openings for cold and for hot water, a delivery passageway for mixed water, a movable slider provided in order to control in complementary way the passage sections of said inlet openings for cold and hot water, a thermometric element of the type operating by dilation, provided in order to displace said slider according to the temperature of the delivered mixed water, a spring for returning the slider, and a control shaft provided for controlling the position of said thermometric element in order to control the temperature of the delivered mixed water

In these devices, in order to control the passage sections of said inlet openings for cold water and for hot water, the slider cooperates with fixed parts of the device body, and therefore its maximum stroke is pre-established in a rigid manner and cannot be exceeded. For this reason, in special conditions in which the thermometric element aims to impose to the slider a stroke larger than the maximum stroke allowed, excessive stresses could take place and give rise to damages to the device and particularly to the thermometric element itself. In order to prevent such excessive stresses it is needed to provide a security elastic element, customarily formed by a helicoidal spring, so arranged as to prevent said excessive stresses to arise.

In the known embodiments (as for example according to the document EP 0,740,808), said security spring is inserted inside the control shaft, whereby the position of the thermometric element is established by the control shaft not in a rigid manner but with the possibility of an elastic yielding which prevents possible excessive stresses. This arrangement of the security spring inside the control shaft is effective, however it generates an increase in the number of parts constituting the structures of the control shaft and of the device body, and also a heavy complication in the operations for mounting the device. Moreover, due to the considerable number of parts constituting the structures, it is needed to foresee for certain device parts very reduced cross sections, and this imposes to have recourse to a construction which is expensive both for the materials selection and for its machining. Particularly, it is not economically possible to have recourse to manufacture processes by injection of metals or plastics. All the foregoing causes a noticeable cost of the device.

In view of the foregoing, the main object of this invention is to improve a thermostatic mixer device in order to allow its manufacture with a structure comprising a reduced number of component parts, allowing an easy mounting operation and also allowing using materials of low cost, though ensuring a correct operation.

According to the invention, a thermostatic mixer device of the kind specified in the preamble includes a member movable along a limited stroke. provided in register with the inlet opening for hot water and cooperating with said slider in order to control the passage section of said inlet opening for hot water, and the needed elastic security element is provided for operating between the bottom member of the device and said movable element, and it has the character of an elastic return member which normally keeps said movable element in a pre-established position, but allows its elastic retraction.

In this way, the slider cooperates in one direction of its movement with said movable element instead of with a fixed part of the faucet body, and in the normal operation conditions it operates in the usual manner. But, when a condition is verified in which the thermometric element imposes to the slider a stroke exceeding its normal stroke, the slider displaces said movable element from its pre-established position by charging the corresponding return spring, which in this manner acts as a security element and prevents arising excessive stresses.

In an embodiment, the elastic element for returning the movable element is a spring of helicoidal or other suitable shape. In another embodiment, the elastic element for returning the movable element is formed by an element of elastic material, such as for example a silicon rubber. This choice is allowed by the stroke needed for preventing excessive stresses being very limited.

Preferably, the device body comprises a single piece extending along about the entire length of the device, and it is closed at its end opposite the control shaft by a bottom member forming an element constructively separate from the body. In this way, all the inner component parts of the device, except the control shaft, are inserted into the body from the side of the bottom member before the insertion of this latter, and the final insertion of the bottom member completes the device assembly. In this manner, the assemblage is rendered very easy.

The bottom member can be coupled to the body by means of a thread, but it is also possible to foresee that the bottom, member is coupled to the body by means of a ultrasonic welding or by elastically engaging parts.

From the foregoing follows an extreme simplification of the assemblage operations of the device, whose structure can be formed by a very reduced number of component parts having a simple shape.

From the simplification of the body structure and the reduction of the number of the component parts thereof, which do not need to have very limited cross sections, also ensues the possibility of manufacturing all or several of these component parts by using simple processes, as for example injection processes, and also the possibility of using a material which is of low cost or easily transformable, such as for example a plastic.

These and other features, objects and advantages of the subject of the present invention will more clearly appear from the following description of two embodiments, being not limiting examples, with reference to the accompanying drawings, wherein:
Figure 1 represents a diametrical section of a thermostatic mixer device having the characteristic conformations according to the invention, in a first embodiment and in the conditions of normal operation.
Figure 2 shows the device according to Figure 1, in a condition in which the elastic security element has intervened.
Figure 3 shows a diametrical section of the body of the device according to Figures 1 and 2.
Figure 4 shows in a diametrical section various parts composing the device according to Figures 1 and 2.
Figure 5 represents a diametrical section of a thermostatic mixer device having the characteristic conformations according to the invention, in a second embodiment and in the conditions of normal operation.
Figure 6 shows the device according to Figure 5, in a condition in which the elastic security element has intervened.
Figure 7 shows a diametrical section of the body of the device according to Figures 5 and 6.
Figure 8 shows in a diametrical section various parts composing the device according to Figures 5 and 6.

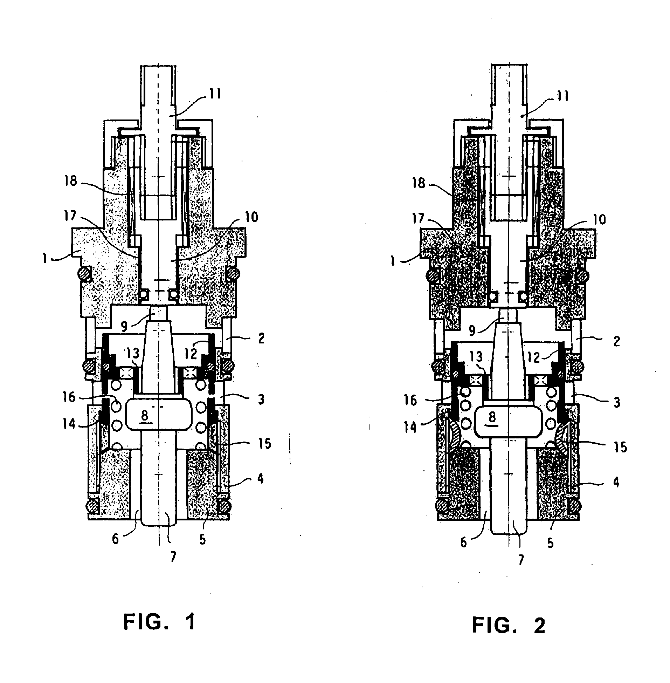

In Figure 1 there is represented a thermostatic mixer device which comprises a body 1 having an opening 2 for inlet of cold water, an opening 3 for inlet of hot water, and an end portion 4 intended to be closed by a bottom member 5 wherein there is formed a passageway 6 for the delivery of mixed water having a controlled temperature. Within the passageway 6 for delivering mixed water there is installed the sensible bulb 7 of a thermometric element 8, whose movable shaft 9 directly rests against a control shaft 10, which is slidably mounted within body 1 and can be operated by the user by means of a rotatable control member 11 which may be provided with a maneuver handle or lever (not represented).

Inside body 1 there is housed an axially movable slider 12 which, by a central portion 13 thereof, is connected to the thermometric element 8. When the thermometric element dilates due to a temperature increase of the mixed water, it pushes the slider 12 towards the opening 3 for inlet of hot water. On the contrary, a spring 16 elastically pushes the slider 12 towards the opening 2 for inlet of cold water.

Inside body 1 there is also housed an axially movable element 14 which, on the side opposite the slider 12, limits the opening 3 for inlet of hot water. The movable element 14 is pushed by an elastic element 15 towards the slider 12, up to a rest position represented in Figure 1. In the present embodiment, the elastic element 15 is formed by a ring of elastic material, for example a silicon rubber.

In a normal operation, the thermometric element 8 and the slider 12 behave just in the usual manner, but in controlling the opening 3 for inlet of hot water the slider 12, instead of cooperating with an edge of this opening, cooperates with the movable element 14 which extends with its end portion along the opening 3 and is kept in its present rest position by action of the elastic element 15.

If an abnormal condition is verified, wherein the thermometric element 8 pushes the slider 12 farther on the normal position in which it closes the opening 3 for inlet of hot water, the slider 12 rests against the movable element 14 and pushes this latter, by charging the elastic element 15, into the position represented in Figure 2. The elastic element 15 becomes curved and still pushes the movable element 14 towards the slider 12. Therefore, the elastic element 15 takes the function of an elastic security element.

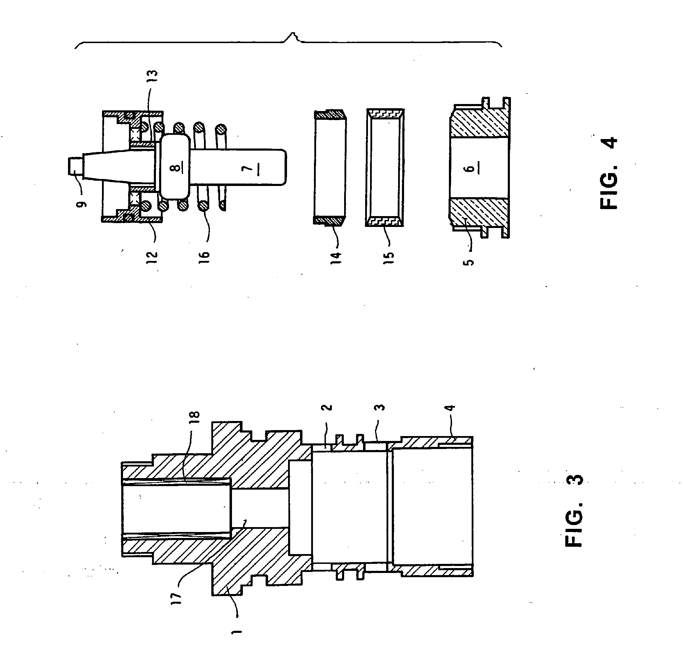

It is of advantage that the elastic element 15 has its end portions inclined, as it may be observed in Figure 4, whereby there is prevented a tendency of the elastic element 15 to escape from its seat when it becomes curved.

It may be observed in Figure 3 that the device body 1, which in the known embodiments is formed by several mutually screwed component parts, is formed by a single member of simple shape, without narrow sections, which can be manufactured by injection process with any material, even by a plastic. Also simple is the structure of the control shaft 10 which lacks the security spring needed in the known embodiments.

It is also to be noted that, in mounting the device, the inner device component parts, namely the slider 12, the thermometric element 8, the spring 16 which pushes the slider, the movable element 14 and its elastic element 15, may be simply inserted into the body 1 from its end 4 which, then, is closed by the bottom member 5, thus completing the device assemblage which, therefore, may be easily executed. The bottom member 5 can be screwed in the end portion of body 1, as it has been shown, or it is possible to foresee its fastening by elastic snap or, in an embodiment of plastic, by ultrasonic welding.

Also the manufacture and the assemblage of the control shaft 10 are very simplified. The control shaft 10 sealingly slides within a cylindrical bore 17 of body 1 and is guided by longitudinal ribs 18. These conformations, which may be observed particularly in Figure 3, can be easily provided in the manufacture of body 1.

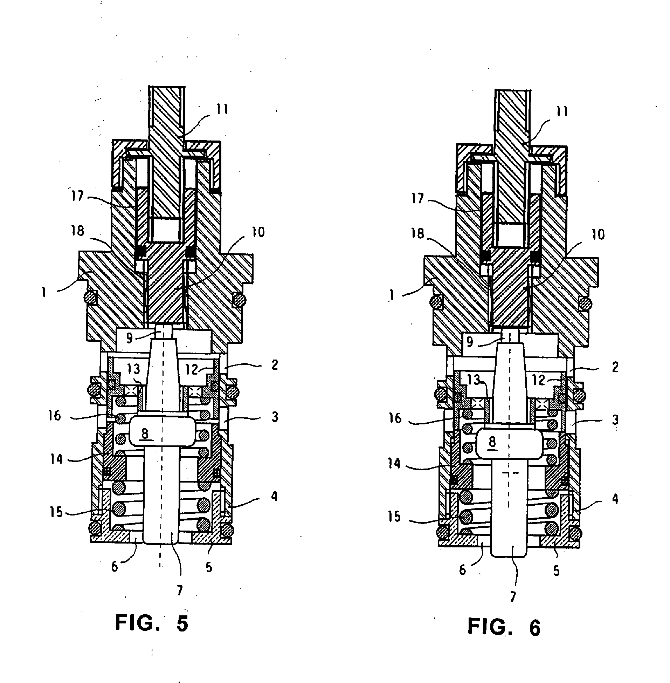

In the embodiment represented in Figures 5 and 6, the elastic security and return element 15 acting onto the movable element 14 is formed by a helicoidal spring, and the helicoidal spring 16 acting onto slider 12 rests against the movable element 14. The operation of this device embodiment remains identical to the operation of the former embodiment. The choice between both embodiments may depend on practical manufacture reasons or on design preferences.

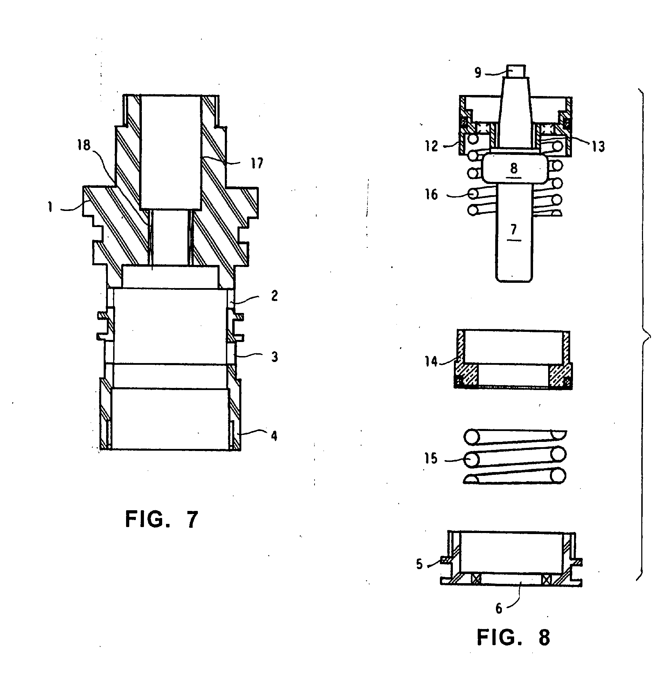

Figure 7 shows an arrangement which is alternative to that shown according to Figure 3. The relative positions of the cylindrical bore 17 wherein sealingly slides the control shaft 10 and of the longitudinal guide ribs 18 are mutually reversed. By this arrangement the manufacture of body 1 is further rendered easy. When needed, the guide ribs 18 may also be easily provided by a broaching operation.

Of course, the helicoidal springs may be replaced by springs of any different suitable shape.

As it appears from the foregoing, the application of the invention allows to carry out the device by an easy manufacture, with a simple structure of low cost, though without in any manner compromising the correct device operation.

It is to be understood that this invention is not limited to the embodiments described and shown as examples. Several possible modifications have been pointed out in the course of the description, and others are within the ability of those skilled in the art. These modification and others, and any replacement by technically equivalent means, can be made to what has been described and shown, without departing from the spirit of the invention and the scope of this Patent as defined by the appended Claims.

## Claims

1. A thermostatic mixer device for sanitary use, comprising: a body (1), a bottom member (5) an inlet opening (2) for cold water, an inlet opening (3) for hot water, a delivery passageway (6) for mixed water, a movable slider (12) provided in order to control in complementary way the passage sections of said inlet openings (2,3) for cold and hot water, a thermometric element (7-9) of the type operating by dilation, provided in order to displace said slider (12) according to the temperature of the delivered mixed water, a spring (16) for returning the slider (12), and a control shaft (10) provided for controlling the position of said thermometric element (7-9) in order to control the temperature of the delivered mixed water, **characterized in that** the thermostatic mixer device includes a member (14) movable along a limited stroke. provided in register with said inlet opening (3) for hot water and cooperating with said slider (12) in order to control the passage section of said inlet opening (3) for hot water, and an elastic security element (15) is provided for operating between the bottom member (5) of the device and said movable element (14), and it has the character of an elastic return member which normally keeps said movable element (14) in a pre-established position, but allows its elastic retraction.

2. A thermostatic mixer device as set forth in Claim 1, **characterized in that** said elastic element (15) for returning the movable element (14) is formed by an element of elastic material, such as for example a silicon rubber.

3. A thermostatic mixer device as set forth in Claim 2, **characterized in that** said element (15) of elastic material intended for returning the movable element (14) has its end portions inclined.

4. A thermostatic mixer device as set forth in Claim 1, **characterized in that** said elastic element (15) for returning the movable element (14) is formed by a spring, helicoidal or of other suitable shape.

5. A thermostatic mixer device as set forth in Claim 1, **characterized in that** the device body (1) comprises a single piece extending along about the entire length of the device, and it is closed at its end opposite the control shaft (10) by a bottom member (5) forming an element constructively separate from the body (1) and connected thereto at the time of the assembly.

6. A thermostatic mixer device as set forth in Claim 1, **characterized in that**, during the device assembly, all inner component parts (7-16) of the device, except the control shaft (10), are inserted into the body (1) from the side of the bottom member (5) before the insertion of this latter, and the final insertion of the bottom member (5) completes the device assembly.

7. A thermostatic mixer device as set forth in Claim 6, **characterized in that** said bottom member (5) is coupled to the body (1) by means of a thread.

8. A thermostatic mixer device as set forth in Claim 6, **characterized in that** said bottom member (5) is coupled to the body (1) by means of elastically engaging parts.

9. A thermostatic mixer device as set forth in Claim 1, **characterized in that** several of its component parts (1,5) are manufactured by using a material which is of low cost or easily transformable, such as for example a plastic.

10. A thermostatic mixer device as set forth in Claim 8, **characterized in that** said bottom member (5) is coupled to the body (1) by means of a ultrasonic welding.
